# FASCICULE DE BREVET EUROPEEN

(11) **EP 4 561 858 B1**
(45) Date de publication et mention de la délivrance du brevet: **13.05.2026**
(21) Numéro de dépôt: 23731329.1
(22) Date de dépôt: 01.06.2023
(51) Int. Cl.: B60L 7/26, B60T 13/52, B60T 13/72, B60L 3/00, B60L 3/08, B60T 17/22, G01L 27/00

(54) **PROCÉDÉ DE PILOTAGE D'UNE MACHINE ÉLECTRIQUE DE TRACTION D'UN VÉHICULE**
VERFAHREN ZUR STEUERUNG EINER ELEKTRISCHEN TRAKTIONSMASCHINE EINES FAHRZEUGS
METHOD FOR CONTROLLING AN ELECTRIC TRACTION MACHINE OF A VEHICLE

(30) Priorité: 29.07.2022 FR 2207844
(43) Date de publication de la demande: 04.06.2025
(73) Titulaire: Stellantis Auto SAS, 78300 Poissy (FR)
(72) Inventeur: BALENGHIEN, Olivier, 93390 CLICHY SOUS BOIS (FR); LE CLERC, Jean Francois, 92600 ASNIERES SUR SEINE (FR)
(74) Mandataire: PSIP
(86) Numéro de dépôt international: PCT/FR2023/050761
(87) Numéro de publication internationale: WO 2024/023405

(56) Documents cités:
- DE-A1- 102013 218 079
- JP-A- 2006 002 667
- KR-B1- 101 872 679
- US-A1- 2013 060 442
- US-A1- 2013 297 179
- US-A1- 2019 308 598

## Description

La présente invention revendique la priorité de la demande française N°2207844 déposée le 29.07.2022 dont le contenu (texte, dessins et revendications) est ici incorporé par référence.

Un aspect de l'invention se rapporte à un procédé de pilotage d'une machine électrique de traction d'un véhicule, ledit pilotage ayant lieu successivement à une détection d'une défaillance d'au moins un capteur de pression d'un amplificateur de freinage que comporte le véhicule.

Un autre aspect de l'invention porte sur un véhicule électrique ou hybride, notamment automobile, construit et agencé pour mettre en œuvre un procédé de pilotage d'une machine électrique de traction.

Ces aspects de l'invention trouvent des applications particulièrement intéressantes dans le domaine de la sécurité des véhicules automobiles électriques ou hybrides.

Un amplificateur de freinage est habituellement implémenté sur un véhicule automobile dans l'objectif d'amplifier l'effort que doit exercer un conducteur sur une pédale de frein. A cette fin, un amplificateur de freinage coopère avec une pompe à vide électrique construite et agencée pour générer du vide dans l'amplificateur de freinage du véhicule. A chaque appui sur la pédale de frein du véhicule, du vide est consommé pour assurer l'assistance au freinage nécessaire au conducteur du véhicule. Dès que la réserve de vide devient inférieure à un seuil prédéterminé, la pompe à vide électrique s'enclenche pour reconstituer la réserve de vide que contient l'amplificateur de freinage.

La pression générée par la pompe à vide dans l'amplificateur de freinage est surveillée au moyen d'un capteur de pression. Plus particulièrement, ce capteur de pression transmet une information de pression à un calculateur du véhicule, lequel vérifie que la valeur de pression détectée est dans une plage de pression acceptable. Dès lors que cette valeur est en dehors de cette plage, le capteur de pression est considéré comme défectueux.

Afin de détecter des fausses mesures de pression, il est également connu du document US-A1-7467544 de redonder le capteur de pression de l'amplificateur de freinage. Sous un niveau de seuil de dérive des mesures effectuées par les deux capteurs, une défaillance est signalée.

Si un tel procédé permet de détecter une défaillance d'un des capteurs de pression, l'existence même d'une telle défaillance risque d'impacter la capacité de freinage du véhicule.

Le but de l'invention est de pallier les inconvénients de l'art antérieur en proposant un procédé permettant de sécuriser le véhicule en cas de détection d'une défaillance d'un capteur de pression d'un amplificateur de freinage.

Dans ce contexte, l'invention se rapporte ainsi, dans son acceptation la plus large, à un procédé de pilotage d'une machine électrique de traction d'un véhicule électrique ou hybride, ledit procédé comportant, lorsque le véhicule est en roulage, les étapes, exécutées par des moyens de contrôle du véhicule, de :
- Détecter une défaillance d'au moins un premier capteur de pression ou un deuxième capteur de pression d'un amplificateur de freinage du véhicule,
- Déterminer une valeur de vitesse du véhicule,
- Le procédé étant remarquable en ce qu'il comporte en outre les étapes de :
   - Lorsqu'une défaillance d'au moins un des premier capteur de pression ou deuxième capteur de pression est détectée, déterminer une valeur de couple à appliquer à des roues motrices du véhicule, en fonction de la valeur de vitesse déterminée, pour amener le véhicule à une valeur de vitesse de sécurité prédéterminée,
   - Appliquer la valeur de couple déterminée aux roues motrices au moyen de la machine électrique de traction.

Grâce au procédé de l'invention, lors d'une détection d'une défaillance d'au moins un capteur de pression de l'amplificateur de freinage, la vitesse du véhicule est amenée à une vitesse de sécurité prédéterminée, par exemple comprise entre 10 et 20 km/h de sorte que le conducteur puisse arrêter le véhicule sans assistance de freinage.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

US 2019/308598 A1 divulgue un procédé de commande d'une machine de traction électrique d'un véhicule électrique ou hybride.

Selon un aspect de l'invention non limitatif, le procédé comporte une étape, exécutée par les moyens de contrôle, d'afficher, sur une console d'affichage du véhicule, un voyant d'arrêt du véhicule.

Selon un aspect de l'invention non limitatif, le procédé comporte une étape, exécutée par les moyens de contrôle, d'afficher, sur une console d'affichage du véhicule, un message reflétant qu'une défaillance d'au moins un des premier capteur de pression ou deuxième capteur de pression du véhicule a été détecté.

Selon un aspect de l'invention non limitatif, l'étape de détecter une défaillance d'au moins un des premier capteur de pression ou deuxième capteur de pression comporte les sous-étapes de :
- Recevoir une première mesure de pression de l'amplificateur de freinage déterminée au moyen du premier capteur de pression,
- Recevoir une deuxième mesure de pression de l'amplificateur de freinage déterminée au moyen du deuxième capteur de pression,
- Déterminer un écart de pression entre les première et deuxième mesures de pression,
- Réitérer, périodiquement selon une première période déterminée, les sous-étapes de recevoir une première mesure de pression, recevoir une deuxième mesure de pression et déterminer un écart de pression,
- Si l'écart de pression déterminé est supérieur à un seuil de pression pendant une deuxième période prédéterminée, déterminer une défaillance d'au moins un des premier capteur de pression ou deuxième capteur de pression.

Selon un aspect de l'invention non limitatif, le procédé comporte une étape, exécutée par les moyens de contrôle, de piloter une pompe à vide de l'amplificateur de freinage en fonction de la mesure de pression la plus faible parmi la première et la deuxième mesures de pression.

Selon un aspect de l'invention non limitatif, lorsqu'une défaillance d'au moins un des premier capteur de pression ou deuxième capteur de pression a été détectée, il comporte les étapes, exécutées via les moyens de contrôle, de :
- Réitérer périodiquement selon la première période déterminée, les sous-étapes de recevoir une première mesure de pression, recevoir une deuxième mesure de pression et déterminer un écart de pression,
- Si l'écart de pression déterminé est inférieur au seuil de pression pendant une troisième période prédéterminée, déterminer un rétablissement de fonctionnement du au moins un des premier capteur de pression ou deuxième capteur de pression.

Selon un aspect de l'invention non limitatif, le procédé comporte une étape, exécutée par les moyens de contrôle, d'arrêter d'appliquer la valeur de couple déterminée aux roues motrices au moyen de la machine électrique de traction.

Selon un aspect de l'invention non limitatif, le procédé comporte une étape, exécutée par les moyens de contrôle, d'éteindre le voyant d'arrêt du véhicule.

Selon un aspect de l'invention non limitatif, le procédé comporte une étape, exécutée par les moyens de contrôle, d'éteindre le message reflétant qu'une défaillance du au moins un des premier capteur de pression ou deuxième capteur de pression a été détecté.

Selon un aspect de l'invention non limitatif, le procédé comporte une étape, exécutée par les moyens de contrôle, de piloter une pompe à vide de l'amplificateur de freinage en fonction d'une mesure de pression réalisée par le premier capteur de pression ou le deuxième capteur de pression présélectionné comme capteur de référence.

L'invention et ses différentes applications seront mieux comprises à la lecture de la description qui suit et à l'examen des figures qui l'accompagnent.

[Fig. 1] illustre, de façon schématique, un véhicule électrique conforme à un aspect non limitatif de l'invention.

[Fig. 2] représente, de façon schématique, un exemple de réalisation d'un procédé de pilotage d'une machine électrique de traction d'un véhicule électrique ou hybride selon un aspect non limitatif de l'invention.

[Fig. 3] montre une courbe de référence pouvant être implémentée dans un procédé de pilotage d'une machine électrique de traction d'un véhicule électrique ou hybride selon un aspect non limitatif de l'invention.

Sauf précision contraire, un même élément apparaissant sur des figures différentes présente une référence unique.

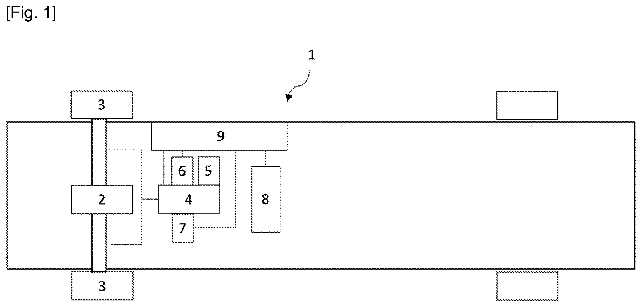

La figure 1 illustre de façon schématique un véhicule 1 électrique selon l'invention.

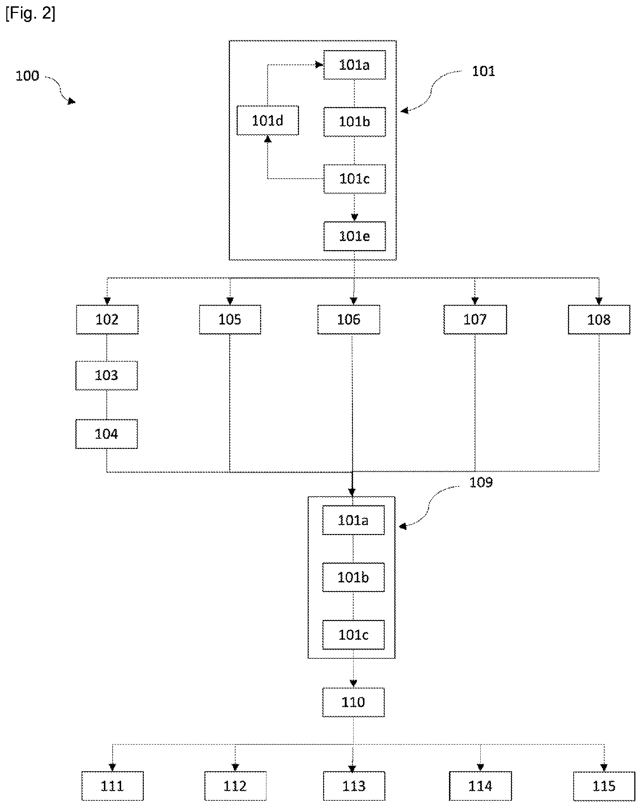

Le véhicule 1 électrique comporte :
- Une machine électrique de traction 2,
- Deux roues motrices 3 entraînée en rotation par la machine électrique de traction 2,
- Un amplificateur de freinage 4,
- Une pompe à vide 5,
- Un premier capteur de pression 6,
- Un deuxième capteur de pression 7,
- Une console d'affichage 8, et
- Des moyens de contrôle 9 agencés pour mettre en œuvre des étapes d'un procédé de pilotage d'une machine électrique de traction tel qu'illustré en figure 2. Les moyens de contrôle 9 peuvent par exemple être formés par une unité de contrôle véhicule (plus connue sous l'acronyme VCU pour Vehicle Control Unit en anglais) et/ou par un boitier de servitude intelligent, plus connu sous l'acronyme BSI.

La figure 2 illustre un exemple de réalisation d'un procédé 100 de pilotage d'une machine électrique de traction 2 d'un véhicule 1 électrique ou hybride selon l'invention.

Il convient de noter que les étapes présentées ci-après du procédé 100 sont exécutées lorsque le véhicule 1 est en roulage.

Le procédé 100 comporte une étape de détecter 101, via les moyens de contrôle 9 du véhicule 1, une défaillance d'au moins un des premier capteur de pression 6 ou deuxième capteur de pression 7 de l'amplificateur de freinage 4 du véhicule 1.

Dans une mise en œuvre non limitative, l'étape de détecter 101 une défaillance d'au moins un des premier capteur de pression 6 et deuxième capteur de pression 7 comporte les sous-étapes de :
- Recevoir 101a une première mesure de pression de l'amplificateur de freinage 4 déterminée au moyen du premier capteur de pression 6,
- Recevoir 101b une deuxième mesure de pression de l'amplificateur de freinage 4 déterminée au moyen du deuxième capteur de pression 7, puis
- Déterminer 101c un écart de pression entre les première et deuxième mesures de pression.

Pour exécuter la sous-étape de déterminer 101c un écart de pression, les moyens de contrôle 9 déterminent, par exemple, l'écart de pression en prenant la valeur absolue de la première mesure de pression à laquelle on retire la deuxième mesure de pression.

L'étape de détecter 101 comporte également une étape de réitérer 101d, périodiquement selon une première période déterminée, les sous-étapes de recevoir 101a une première mesure de pression, recevoir 101b une deuxième mesure de pression et déterminer 101c un écart de pression.

Dans un exemple de réalisation non limitatif, la première période déterminée est comprise entre 100 et 300 millisecondes, typiquement 200 millisecondes.

L'étape de détecter 101 comporte également, si l'écart de pression déterminé est supérieur à un seuil de pression pendant une deuxième période prédéterminée, une sous-étape de déterminer 101e une défaillance d'au moins un des premier capteur de pression 6 ou deuxième capteur de pression 7.

Dans un exemple de réalisation non limitatif, le seuil de pression est compris entre 0,1 bars et 0,3 bars, typiquement 0,2 bars.

Dans un exemple de réalisation non limitatif, la deuxième période déterminée est comprise entre 1000 et 3200 millisecondes, typiquement 1600 millisecondes.

Le procédé 100 comporte également une étape de déterminer 102, via les moyens de contrôle 9, une valeur de vitesse du véhicule 1.

Lorsqu'une défaillance d'au moins un des premier capteur de pression 6 ou deuxième capteur de pression 7est détectée, le procédé 100 comporte une étape de déterminer 103, via les moyens de contrôle 9, une valeur de couple à appliquer aux roues motrices 3 du véhicule 1. La valeur de couple à appliquer est déterminée en fonction de la valeur de vitesse déterminée pour amener le véhicule 1 à une valeur de vitesse de sécurité prédéterminée.

Dans un exemple de réalisation non limitatif, la valeur de vitesse de sécurité prédéterminée est comprise entre 10 et 30 km/h, par exemple 17 km/h.

La valeur de couple à appliquer est déterminée en fonction d'une cartographie de valeurs de couple en fonction de valeurs de vitesse.

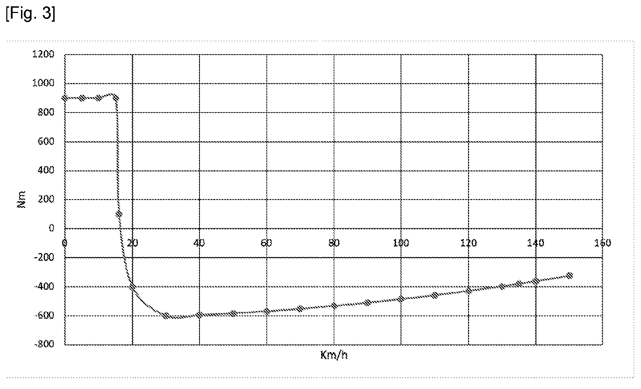

La valeur de couple à appliquer aux roues motrices 3 du véhicule 1 peut par exemple être déterminée par les moyens de contrôle 9 au moyen d'une cartographie similaire à celle illustrée à la figure 3.

Plus particulièrement, la figure 3 illustre une cartographie de valeurs de couple en fonction de valeurs de vitesse (cette cartographie dépend des caractéristiques du véhicule).

Il convient de noter que lorsqu'il s'agit de valeur de couple de freinage, un signe - est inscrit devant la valeur de couple de freinage. Un tel couple de freinage peut être généré par la machine électrique 2 de traction lorsqu'elle fonctionne en mode régénératif également connu sous la dénomination régénérative.

Lorsque la valeur de couple est une valeur de couple d'accélération, aucun signe n'est disposé devant la valeur.

Par exemple, selon cette cartographie, si la valeur de vitesse du véhicule déterminée est de 40km/h, la valeur de couple à appliquer aux roues motrices 3 du véhicule est de -600Nm.

Le procédé 100 comporte en outre une étape d'appliquer 104 la valeur de couple déterminée aux roues motrices 3. Pour ce faire, les moyens de contrôle 9 pilotent la machine électrique de traction 2 de sorte à appliquer un couple d'accélération ou un couple de freinage aux roues motrices 3 et amener le véhicule 1 à une valeur de vitesse de sécurité prédéterminée.

Le procédé 100 comporte une étape d'afficher 105, sur la console d'affichage 8 du véhicule 1, un voyant d'arrêt du véhicule 1. Cet affichage peut être piloté par les moyens de contrôle 9.

Le voyant d'arrêt peut être formé par le mot STOP. Comme le véhicule 1, et notamment l'accélération du véhicule 1 ne répond plus au souhait du conducteur, ce voyant permet d'informer le conducteur du véhicule 1 qu'il est préférable de stopper son véhicule.

Le procédé 100 comporte en outre une étape d'afficher 106, sur la console d'affichage 8, un message reflétant qu'une défaillance d'au moins un des premier capteur de pression 6 ou deuxième capteur de pression 7 de l'amplificateur de freinage 4 du véhicule 1 a été détecté. Ce message permet d'informer le conducteur qu'il doit apporter son véhicule au service après-vente afin de réparer la défaillance. Cet affichage peut être piloté par les moyens de contrôle 9.

Le procédé 100 comporte une étape de piloter 107, via les moyens de contrôle 9, la pompe à vide 5 de l'amplificateur de freinage 4 en fonction de la mesure de pression la plus faible parmi la première et la deuxième mesures de pression.

Ainsi, la pompe à vide 5 risque de fournir trop de vide. Cette situation est préférable afin de sécuriser le freinage.

Le procédé 100 comporte également une étape d'enregistrer 108 un code de défaillance reflétant qu'une défaillance d'au moins un des premier capteur de pression 6 ou deuxième capteur de pression 7 de l'amplificateur de freinage 4 du véhicule 1 a été détecté. Cette étape d'enregistrer 108 peut être exécutée par les moyens de contrôle 9.

Lorsqu'une défaillance d'au moins un des premier capteur de pression 6 ou deuxième capteur de pression 7 a été déterminée, le procédé 100 comporte les étapes de :
- Réitérer 109, périodiquement, via les moyens de contrôle 9, selon la première période déterminée, par exemple de 200 millisecondes, les sous-étapes de recevoir 101a une première mesure de pression, recevoir 101b une deuxième mesure de pression et déterminer 101c un écart de pression, puis
- Si l'écart de pression déterminé est inférieur au seuil de pression pendant une troisième période prédéterminée, déterminer 110, via les moyens de contrôle 9, un rétablissement de fonctionnement du au moins un des premier capteur de pression 6 ou deuxième capteur de pression 7.

Dans un exemple de réalisation non limitatif, la troisième période prédéterminée est comprise entre 1000 et 3000 millisecondes, typiquement 2000 millisecondes.

Dans cet exemple de réalisation, lorsqu'un rétablissement de fonctionnement d'au moins un des premier capteur de pression 6 ou deuxième capteur de pression 7 est déterminé, le procédé 100 comporte les étapes, exécutées via les moyens de contrôle 9, de :
- arrêter 111 d'appliquer la valeur de couple déterminée aux roues motrices 3 au moyen de la machine électrique de traction 2,
- Éteindre 112 le voyant d'arrêt du véhicule 1,
- Éteindre 113 le message reflétant qu'une défaillance du au moins un des premier capteur de pression 6 ou deuxième capteur de pression 7 a été détecté, et
- Piloter 114 la pompe à vide 5 de l'amplificateur de freinage 4 en fonction de la mesure de pression du premier capteur 6 ou du deuxième capteur 7 présélectionné comme capteur de référence.

Ainsi, lorsque le premier capteur 6 est présélectionné comme capteur de référence, lorsqu'aucune défaillance d'un des premier et deuxième capteurs de pression 6, 7 n'est détecté, le vide généré dans l'amplificateur de freinage 4 est fonction des mesures de pression réalisées par le premier capteur 6.

A l'inverse, lorsque le deuxième capteur 7 est présélectionné comme capteur de référence, lorsqu'aucune défaillance d'un des premier et deuxième capteurs de pression 6, 7 n'est détecté, le vide généré dans l'amplificateur de freinage 4 est fonction des mesures de pression réalisées par le deuxième capteur 7.

Dans cet exemple de réalisation, lorsqu'un rétablissement de fonctionnement du au moins un des premier et deuxième capteurs de pression 6, 7 est déterminé, le procédé 100 comporte une étape d'enregistrer 115 un code de rétablissement reflétant qu'un rétablissement de fonctionnement du au moins un des premier et deuxième capteurs de pression 6, 7 de l'amplificateur de freinage 4 du véhicule 1 a été détecté. Cette étape d'enregistrer 115 peut être exécutée par les moyens de contrôle 9 du véhicule.

Il convient de noter que l'homme du métier est en mesure d'apporter différentes variantes aux aspects de l'invention précités, par exemple en modifiant la cartographie ou en modifiant les valeurs des première, deuxième et/ou troisième périodes, ou encore en modifiant la valeur du seuil de pression.

## Revendications

1. Procédé (100) de pilotage d'une machine électrique de traction (2) d'un véhicule (1) électrique ou hybride, ledit procédé (100) comportant, lorsque ledit véhicule (1) est en roulage, les étapes, exécutées par des moyens de contrôle (9), dudit véhicule (1) de :
- Détecter (101) une défaillance d'au moins un premier capteur de pression (6) ou un deuxième capteur de pression (7) d'un amplificateur de freinage (4) dudit véhicule (1),
- Déterminer (102) une valeur de vitesse dudit véhicule (1),
- Ledit procédé (100) étant **caractérisé en ce qu'**il comporte en outre les étapes de :
o Lorsqu'une défaillance d'au moins un des premier capteur de pression (6) ou deuxième capteur de pression (7) est détectée, déterminer (103) une valeur de couple à appliquer à des roues motrices (3) dudit véhicule (1), en fonction de ladite valeur de vitesse déterminée, pour amener ledit véhicule (1) à une valeur de vitesse de sécurité prédéterminée,
∘ Appliquer (104) ladite valeur de couple déterminée auxdites roues motrices (3) au moyen de ladite machine électrique de traction (2).

2. Procédé (100) selon la revendication 1, **caractérisé en ce qu'**il comporte une étape, exécutée par les moyens de contrôles (9), d'afficher (105), sur une console d'affichage (8) dudit véhicule (1), un voyant d'arrêt dudit véhicule (1).

3. Procédé (100) selon l'une quelconque des revendications précédentes, **caractérisé en ce qu'**il comporte une étape, exécutée par les moyens de contrôles (9), d'afficher (106), sur une console d'affichage (8) dudit véhicule (1), un message reflétant qu'une défaillance d'au moins un des premier capteur de pression (6) ou deuxième capteur de pression (7) du véhicule (1) a été détecté.

4. Procédé (100) selon l'une quelconque des revendications précédentes, **caractérisé en ce que** l'étape de détecter (101) une défaillance d'au moins un des premier capteur de pression (6) ou deuxième capteur de pression (7) comporte les sous-étapes de :
- Recevoir (101a) une première mesure de pression de l'amplificateur de freinage (4) déterminée au moyen du premier capteur de pression (6),
- Recevoir (101b) une deuxième mesure de pression de l'amplificateur de freinage (4) déterminée au moyen du deuxième capteur de pression (7),
- Déterminer (101c) un écart de pression entre les première et deuxième mesures de pression,
- Réitérer (101d), périodiquement selon une première période déterminée, les sous-étapes de recevoir (101a) une première mesure de pression, recevoir (101b) une deuxième mesure de pression et déterminer (101c) un écart de pression,
- Si ledit écart de pression déterminé est supérieur à un seuil de pression pendant une deuxième période prédéterminée, déterminer (101e) une défaillance d'au moins un des premier capteur de pression (6) ou deuxième capteur de pression (7).

5. Procédé (100) selon la revendication précédente **caractérisé en ce qu'**il comporte une étape, exécutée par les moyens de contrôles (9), de piloter (107) une pompe à vide (5) de l'amplificateur de freinage (4) en fonction de la mesure de pression la plus faible parmi la première et la deuxième mesure de pression.

6. Procédé (100) selon l'une quelconque des revendications 4 ou 5, **caractérisé en ce que** lorsqu'une défaillance d'au moins un des premier capteur de pression (6) ou deuxième capteur de pression (7) a été détectée, il comporte les étapes, exécutées via les moyens de contrôle (9), de :
- Réitérer (109) périodiquement selon la première période déterminée, les sous-étapes de recevoir (101a) une première mesure de pression, recevoir (101b) une deuxième mesure de pression et déterminer (101c) un écart de pression,
- Si ledit écart de pression déterminé est inférieur au seuil de pression pendant une troisième période prédéterminée, déterminer (110) un rétablissement de fonctionnement du au moins un des premier capteur de pression (6) ou deuxième capteur de pression (7).

7. Procédé (100) selon la revendication précédente **caractérisé en ce qu'**il comporte une étape, exécutée par les moyens de contrôles (9), d'arrêter (111) d'appliquer la valeur de couple déterminée aux roues motrices (3) au moyen de la machine électrique de traction (2).

8. Procédé (100) selon l'une quelconque des revendications 6 ou 7 **caractérisé en ce qu'**il comporte une étape, exécutée par les moyens de contrôles (9), d'éteindre (112) le voyant d'arrêt du véhicule (1).

9. Procédé (100) selon l'une quelconque des revendications 6 à 8, **caractérisé en ce qu'**il comporte une étape, exécutée par les moyens de contrôles (9), d'éteindre (113) le message reflétant qu'une défaillance du au moins un des premier capteur de pression (6) ou deuxième capteur de pression (7) a été détecté.

10. Procédé (100) selon l'une quelconque des revendications 6 à 9, **caractérisé en ce qu'**il comporte une étape, exécutée par les moyens de contrôles (9), de piloter (114) une pompe à vide (5) de l'amplificateur de freinage (4) en fonction d'une mesure de pression réalisée par le premier capteur de pression (6) ou le deuxième capteur de pression (7) présélectionné comme capteur de référence.

## Patentansprüche

1. Verfahren (100) zum Steuern einer elektrischen Traktionsmaschine (2) eines Elektro- oder Hybridfahrzeugs (1), wobei das Verfahren (100), wenn sich das Fahrzeug (1) in Fahrt befindet, die durch Steuermittel (9) des Fahrzeugs (1) ausgeführten Schritte umfasst:
- Erkennen (101) eines Ausfalls mindestens eines ersten Drucksensors (6) oder eines zweiten Drucksensors (7) eines Bremskraftverstärkers (4) des Fahrzeugs (1),
- Bestimmen (102) eines Geschwindigkeitswerts des Fahrzeugs (1),
- Wobei das Verfahren (100) **dadurch gekennzeichnet ist, dass** es ferner die folgenden Schritte umfasst:
o Wenn ein Ausfall mindestens eines des ersten Drucksensors (6) oder zweiten Drucksensors (7) erkannt wird, Bestimmen (103) eines Drehmomentwerts, der auf Antriebsräder (3) des Fahrzeugs (1) aufzubringen ist, in Abhängigkeit von dem bestimmten Geschwindigkeitswert, um das Fahrzeug (1) auf einen vorbestimmten Sicherheitsgeschwindigkeitswert zu bringen,
o Aufbringen (104) des bestimmten Drehmomentwerts auf die Antriebsräder (3) mittels der elektrischen Traktionsmaschine (2).

2. Verfahren (100) nach Anspruch 1, **dadurch gekennzeichnet, dass** es einen Schritt umfasst, der durch die Steuermittel (9) ausgeführt wird, zum Anzeigen (105) einer Fahrzeug-Stoppanzeige auf einer Anzeigeeinheit (8) des Fahrzeugs (1).

3. Verfahren (100) nach einem der vorhergehenden Ansprüche, **dadurch gekennzeichnet, dass** es einen Schritt umfasst, der durch die Steuermittel (9) ausgeführt wird, zum Anzeigen (106) einer Meldung auf einer Anzeigeeinheit (8) des Fahrzeugs (1), die anzeigt, dass ein Ausfall mindestens eines des ersten Drucksensors (6) oder zweiten Drucksensors (7) erkannt wurde.

4. Verfahren (100) nach einem der vorhergehenden Ansprüche, **dadurch gekennzeichnet, dass** der Schritt des Erkennens (101) eines Ausfalls mindestens eines des ersten Drucksensors (6) oder zweiten Drucksensors (7) die folgenden Teilschritte umfasst:
- Empfangen (101a) einer ersten Druckmessung des Bremskraftverstärkers (4), bestimmt mittels des ersten Drucksensors (6),
- Empfangen (101b) einer zweiten Druckmessung des Bremskraftverstärkers (4), bestimmt mittels des zweiten Drucksensors (7),
- Bestimmen (101c) einer Druckabweichung zwischen der ersten und der zweiten Druckmessung,
- Wiederholen (101d), periodisch gemäß einer bestimmten ersten Periode, der Teilschritte Empfangen (101a) einer ersten Druckmessung, Empfangen (101b) einer zweiten Druckmessung und Bestimmen (101c) einer Druckabweichung,
- Wenn die bestimmte Druckabweichung während einer vorbestimmten zweiten Periode größer als ein Druckschwellwert ist, Bestimmen (101e) eines Ausfalls mindestens eines des ersten Drucksensors (6) oder zweiten Drucksensors (7).

5. Verfahren (100) nach dem vorhergehenden Anspruch, **dadurch gekennzeichnet, dass** es einen Schritt umfasst, der durch die Steuermittel (9) ausgeführt wird, zum Steuern (107) einer Vakuumpumpe (5) des Bremskraftverstärkers (4) in Abhängigkeit von der niedrigsten Druckmessung unter der ersten und der zweiten Druckmessung.

6. Verfahren (100) nach einem der Ansprüche 4 oder 5, **dadurch gekennzeichnet, dass**, wenn ein Ausfall mindestens eines des ersten Drucksensors (6) oder zweiten Drucksensors (7) erkannt wurde, es die durch die Steuermittel (9) ausgeführten Schritte umfasst:
- Wiederholen (109) periodisch gemäß der ersten bestimmten Periode der Teilschritte Empfangen (101a) einer ersten Druckmessung, Empfangen (101b) einer zweiten Druckmessung und Bestimmen (101c) einer Druckabweichung,
- Wenn die bestimmte Druckabweichung während einer vorbestimmten dritten Periode kleiner als der Druckschwellwert ist, Bestimmen (110) einer Wiederherstellung der Funktion mindestens eines des ersten Drucksensors (6) oder zweiten Drucksensors (7).

7. Verfahren (100) nach dem vorhergehenden Anspruch, **dadurch gekennzeichnet, dass** es einen Schritt umfasst, der durch die Steuermittel (9) ausgeführt wird, zum Beenden (111) des Aufbringens des bestimmten Drehmomentwerts auf die Antriebsräder (3) mittels der elektrischen Traktionsmaschine (2).

8. Verfahren (100) nach einem der Ansprüche 6 oder 7, **dadurch gekennzeichnet, dass** es einen Schritt umfasst, der durch die Steuermittel (9) ausgeführt wird, zum Ausschalten (112) der Fahrzeug-Stoppanzeige.

9. Verfahren (100) nach einem der Ansprüche 6 bis 8, **dadurch gekennzeichnet, dass** es einen Schritt umfasst, der durch die Steuermittel (9) ausgeführt wird, zum Ausschalten (113) der Meldung, die anzeigt, dass ein Ausfall mindestens eines des ersten Drucksensors (6) oder zweiten Drucksensors (7) erkannt wurde.

10. Verfahren (100) nach einem der Ansprüche 6 bis 9, **dadurch gekennzeichnet, dass** es einen Schritt umfasst, der durch die Steuermittel (9) ausgeführt wird, zum Steuern (114) einer Vakuumpumpe (5) des Bremskraftverstärkers (4) in Abhängigkeit von einer Druckmessung, die durch den ersten Drucksensor (6) oder den zweiten Drucksensor (7) durchgeführt wird, der als Referenzsensor vorausgewählt ist.

## Claims

1. Method (100) for controlling a traction electric machine (2) of an electric or hybrid vehicle (1), said method (100) comprising, when said vehicle (1) is moving, the steps, executed by control means (9) of said vehicle (1), of:
- Detecting (101) a failure of at least one first pressure sensor (6) or a second pressure sensor (7) of a brake booster (4) of said vehicle (1),
- Determining (102) a speed value of said vehicle (1),
- Said method (100) being **characterized in that** it further comprises the steps of:
o When a failure of at least one of the first pressure sensor (6) or second pressure sensor (7) is detected, determining (103) a torque value to be applied to driving wheels (3) of said vehicle (1), as a function of said determined speed value, in order to bring said vehicle (1) to a predetermined safety speed value,
o Applying (104) said determined torque value to said driving wheels (3) by means of said traction electric machine (2).

2. Method (100) according to claim 1, **characterized in that** it comprises a step, executed by the control means (9), of displaying (105), on a display console (8) of said vehicle (1), a vehicle stop warning indicator.

3. Method (100) according to any one of the preceding claims, **characterized in that** it comprises a step, executed by the control means (9), of displaying (106), on a display console (8) of said vehicle (1), a message reflecting that a failure of at least one of the first pressure sensor (6) or second pressure sensor (7) of the vehicle (1) has been detected.

4. Method (100) according to any one of the preceding claims, **characterized in that** the step of detecting (101) a failure of at least one of the first pressure sensor (6) or second pressure sensor (7) comprises the sub-steps of:
- Receiving (101a) a first pressure measurement of the brake booster (4) determined by means of the first pressure sensor (6),
- Receiving (101b) a second pressure measurement of the brake booster (4) determined by means of the second pressure sensor (7),
- Determining (101c) a pressure deviation between the first and second pressure measurements,
- Repeating (101d), periodically according to a determined first period, the sub-steps of receiving (101a) a first pressure measurement, receiving (101b) a second pressure measurement and determining (101c) a pressure deviation,
- If said determined pressure deviation is greater than a pressure threshold during a predetermined second period, determining (101e) a failure of at least one of the first pressure sensor (6) or second pressure sensor (7).

5. Method (100) according to the preceding claim, **characterized in that** it comprises a step, executed by the control means (9), of controlling (107) a vacuum pump (5) of the brake booster (4) as a function of the lowest pressure measurement among the first and second pressure measurements.

6. Method (100) according to any one of claims 4 or 5, **characterized in that** when a failure of at least one of the first pressure sensor (6) or second pressure sensor (7) has been detected, it comprises the steps, executed via the control means (9), of:
- Repeating (109) periodically according to the determined first period, the sub-steps of receiving (101a) a first pressure measurement, receiving (101b) a second pressure measurement and determining (101c) a pressure deviation,
- If said determined pressure deviation is lower than the pressure threshold during a predetermined third period, determining (110) a restoration of operation of at least one of the first pressure sensor (6) or second pressure sensor (7).

7. Method (100) according to the preceding claim, **characterized in that** it comprises a step, executed by the control means (9), of stopping (111) the application of the determined torque value to the driving wheels (3) by means of the traction electric machine (2).

8. Method (100) according to any one of claims 6 or 7 **characterized in that** it comprises a step, executed by the control means (9), of switching off (112) the vehicle stop warning indicator (1).

9. Method (100) according to any one of claims 6 to 8, **characterized in that** it comprises a step, executed by the control means (9), of switching off (113) the message reflecting that a failure of at least one of the first pressure sensor (6) or second pressure sensor (7) has been detected.

10. Method (100) according to any one of claims 6 to 9, **characterized in that** it comprises a step, executed by the control means (9), of controlling (114) a vacuum pump (5) of the brake booster (4) as a function of a pressure measurement carried out by the first pressure sensor (6) or the second pressure sensor (7) preselected as reference sensor.
